# EUROPÄISCHE PATENTSCHRIFT

(11) **EP 3 718 692 B1**
(45) Veröffentlichungstag und Bekanntmachung des Hinweises auf die Patenterteilung: **15.03.2023**
(21) Anmeldenummer: 19167136.1
(22) Anmeldetag: 03.04.2019
(51) Int. Cl.: B24C 3/00, B24C 3/28, B24C 9/00, B29C 64/35

(54) **VORRICHTUNG UND VERFAHREN ZUR NACHBEARBEITUNG VON BAUTEILEN**
METHOD AND DEVICE FOR FINISHING WORKPIECES
DISPOSITIF ET PROCÉDÉ DE FINITION DE COMPOSANTS

(43) Veröffentlichungstag der Anmeldung: 07.10.2020
(73) Patentinhaber: Rösler Holding GmbH, 96231 Bad Staffelstein (DE)
(72) Erfinder: Reinmann, Jan, 98646 Straufhain (DE); Gottschalk, Andreas, 96145 Seßlach (DE); Kollacks, Tom, 96120 Bischberg (DE)
(74) Vertreter: Manitz Finsterwald Patent- und Rechtsanwaltspartnerschaft mbB

(56) Entgegenhaltungen:
- EP-A1- 0 049 404
- WO-A1-2017/017273
- DE-A1- 1 816 313
- US-A1- 2009 283 119

## Beschreibung

Die vorliegende Erfindung betrifft eine Vorrichtung zur Nachbearbeitung von mit additiven Fertigungsverfahren hergestellten Bauteilen nach dem Oberbegriff des Anspruchs 1 (WO 2017/017273). Bei derartigen Fertigungsverfahren, die in verschiedenen Ausführungsvarianten bekannt sind, erfolgt ein schichtweiser Aufbau unter Anwendung von Härtungs- oder Schmelzprozessen. Nach der Herstellung müssen die Bauteile von im Wesentlichen pulverförmigen Resten gesäubert und auf geeignete Weise nachbehandelt werden.

Es ist die Aufgabe der vorliegenden Erfindung, eine Vorrichtung und ein Verfahren zur Nachbearbeitung von mit additiven Fertigungsverfahren hergestellten Bauteilen zu schaffen, mit denen in kurzer Zeit auf wirtschaftliche Weise eine Nachbearbeitung derartiger Bauteile erfolgen kann.

Die Lösung dieser Aufgabe erfolgt durch die Merkmale der unabhängigen Ansprüche 1 und 13.

Eine Vorrichtung zur Nachbearbeitung von Bauteilen, die mit additiven Fertigungsverfahren hergestellt wurden, umfasst eine Entpulverungskammer zur Vorreinigung der Bauteile und eine Strahlkammer zur Nachbehandlung der Bauteile. Hierbei sind beide Kammern hermetisch verschließbar und zwischen beiden Kammern ist eine Schottwand vorgesehen, die eine von einer Klappe verschließbare Durchgangsöffnung aufweist. Mit einer solchen Vorrichtung können die Bauteile nach ihrer Herstellung zunächst in der Entpulverungskammer von Pulverresten befreit werden, wobei durch die hermetisch geschlossene Entpulverungskammer sichergestellt ist, dass das Pulver weitestgehend in der Kammer verbleibt. Unter hermetisch verschließbar bzw. verschlossen wird dabei im Rahmen dieser Erfindung nicht verstanden, dass die Kammern absolut luftdicht bzw. flüssigkeitsdicht verschlossen sind. Vielmehr sollen beide Kammern so verschließbar sein, dass keine wesentlichen Mengen an Pulver bzw. Strahlmittel aus der Kammer gelangen können bzw. von der einen Kammer in die andere Kammer übertragen werden können.

Nach der Vorreinigung der Bauteile in der Entpulverungskammer können diese durch die Durchgangsöffnung in die Strahlkammer übergeben werden, wobei vor der Nachbehandlung die Durchgangsöffnung mit der Klappe verschlossen werden kann. Auf diese Weise ist verhindert, dass Strahlmittel in die Entpulverungskammer gelangt und dadurch die in der Entpulverungskammer vorhandenen Pulverreste kontaminiert. Somit ist durch diese Maßnahmen sichergestellt, dass sich in der Entpulverungskammer nach der Vorreinigung ausschließlich Pulverreste befinden, die einer Wiederverwendung zugeführt werden können. Das Gleiche gilt für Strahlmittel aus der Strahlkammer, das ebenfalls nach der Nachbehandlung recycelt werden kann. Auf diese Weise ist eine sehr effiziente Anlage geschaffen, mit der in kürzester Zeit eine Nachbearbeitung von Bauteilen erfolgen kann, wobei gleichzeitig der Verbrauch von Strahlmittel minimiert ist und Pulverreste einer erneuten Verwendung zugeführt werden können.

Die Entpulverungseinheit in der Entpulverungskammer ist durch einen sich automatisiert öffnenden Deckel verschließbar. Hierdurch lässt sich die Entpulverungseinheit automatisiert beschicken und der Deckel lässt sich automatisiert öffnen, wenn beispielsweise die Bauteile aus der Entpulverungseinheit in die Strahlkammer gefördert werden sollen.

Vorteilhafte Ausführungsformen sind in der Beschreibung, der Zeichnung sowie den Unteransprüchen beschrieben.

Nach einer ersten vorteilhaften Ausführungsform kann die Klappe eine Transferrutsche aufweisen und insbesondere linear verschiebbar sein. Durch die lineare Verschiebbarkeit lässt sich die Klappe sehr platzsparend öffnen, so dass die gesamte Vorrichtung kompakt baut. Wenn weiterhin an der Klappe eine Transferrutsche angebracht ist, lassen sich die vorgereinigten Bauteile nach Öffnen der Klappe über die Transferrutsche in die Strahlkammer fördern, wodurch ein automatisierter Betrieb auf einfache Weise verwirklicht werden kann.

Nach einer weiteren vorteilhaften Ausführungsform kann die Entpulverungseinheit horizontal hin und her bewegbar sein. Eine solche Entpulverungseinheit kann auf an sich bekannte Art und Weise Schwingungserzeuger aufweisen, mit denen die in der Entpulverungseinheit befindlichen Bauteile in Schwingungen versetzt werden. Wenn die Entpulverungseinheit dabei zusätzlich horizontal hin und her bewegbar ist, können die in der Entpulverungseinheit befindlichen Bauteile zusätzlich "geschüttelt" werden, was eine Entpulverung begünstigt. Gleichzeitig ist durch die horizontale Bewegbarkeit der Entpulverungseinheit die Möglichkeit geschaffen, diese innerhalb der Entpulverungskammer in eine Beschickungsposition zu verfahren, in der eine Beschickungseinrichtung die Bauteile automatisiert in die Entpulverungseinheit fördert.

Nach einer weiteren vorteilhaften Ausführungsform kann eine Beschickungseinheit vorgesehen sein, mit der die Bauteile automatisiert in die Entpulverungskammer eingebracht werden können. Hierdurch kann die Vorrichtung weitestgehend ohne manuellen Eingriff automatisiert betrieben werden.

Nach einer weiteren vorteilhaften Ausführungsform kann in der Strahlkammer ein Muldenband vorgesehen sein, das insbesondere schwenkbar gelagert ist. Mit Hilfe eines solchen Muldenbandes lassen sich die Bauteile in der Strahlkammer während des Strahlens mit Strahlmittel durcheinander bewegen, so dass die Bauteile von allen Seiten gleichmäßig gestrahlt werden können, um die Bauteile nachzubehandeln. Um ein Umwälzen der einzelnen Bauteile innerhalb des Muldenbandes noch weiter zu fördern, kann dieses nach einer weiteren vorteilhaften Ausführungsform um eine horizontale Achse hin und her bewegbar sein.

Nach einer weiteren vorteilhaften Ausführungsform kann im Bereich des Muldenbands eine Strahleinrichtung vorgesehen sein, die insbesondere in einen Aufnahmeraum des Muldenbands hineinbewegbar ist. Dies ermöglicht eine gute Ausrichtung des Strahlmittels auf die Bauteile. Gleichzeitig kann die Strahleinrichtung auch so weit aus dem Muldenband herausgefahren werden, dass dieses um die horizontale Achse frei verschwenkbar ist. Hierdurch lässt sich das Muldenband nach einer weiteren vorteilhaften Ausführungsform in eine Aufnahmestellung sowie in eine Abgabestellung verschwenken, um die Bauteile aufzunehmen bzw. abzugeben. In beiden Positionen wird das Muldenband so weit um die horizontale Achse verschwenkt, dass die Öffnung der Mulde entweder in Richtung der Entpulverungskammer verschwenkt wird, um Teile aufzunehmen, oder entgegengesetzt verschwenkt wird, um Bauteile aus der Strahlkammer abzugeben.

Nach einer weiteren vorteilhaften Ausführungsform kann eine Abscheideeinrichtung vorgesehen sein, in der Strahlmittel und Pulverreste voneinander getrennt werden, um das bereits verwendete Strahlmittel einer erneuten Verwendung zuzuführen.

Um das Anhaften von losen Pulverresten möglichst auszuschließen, kann nach einer weiteren vorteilhaften Ausführungsform in der Entpulverungskammer und/oder in der Strahlkammer eine Zuführeinrichtung für ionisierte Luft vorgesehen sein.

Nach einer weiteren vorteilhaften Ausführungsform kann in oder unterhalb der Strahlkammer ein Ausgabetrichter für die nachbearbeiteten Bauteile vorgesehen sein. Durch einen solchen Ausgabetrichter kann gleichzeitig Strahlmittel wieder gesammelt und einer Reinigung und Rückführung zugeführt werden.

Nach einer weiteren vorteilhaften Ausführungsform kann ein Rückführungskreislauf für Pulver und/oder ein Rückführungskreislauf für Strahlmittel vorgesehen sein. Auf diese Weise lassen sich sowohl Pulver wie auch Strahlmittel einer erneuten Verwendung zuführen, was einen äußerst effizienten Betrieb bei geringen Betriebskosten ermöglicht.

Nachfolgend wird die vorliegende Erfindung rein beispielhaft anhand einer vorteilhaften Ausführungsform unter Bezugnahme auf die beigefügten Zeichnungen beschrieben. Es zeigen:
- Fig. 1: eine perspektivische Ansicht einer Vorrichtung zur Nachbearbeitung von Bauteilen;
- Fig. 2: eine vergrößerte Teilansicht der Vorrichtung von Fig. 1, wobei das Muldenband in eine Aufnahmestellung verschwenkt ist; und
- Fig. 3: einen vergrößerten Ausschnitt der Vorrichtung von Fig. 1, wobei das Muldenband in eine Abgabestellung verschwenkt ist.

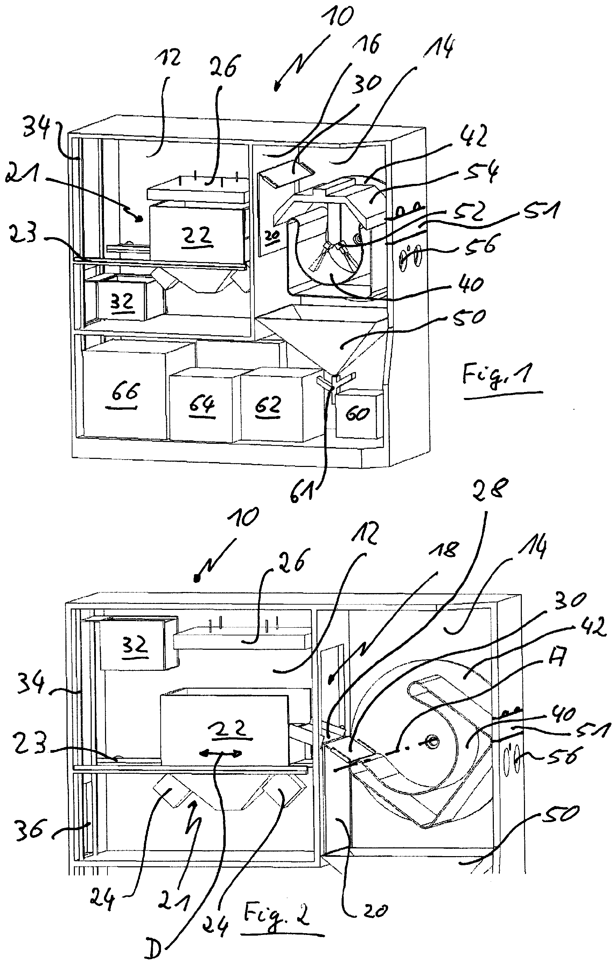

Die in Fig. 1 dargestellte Vorrichtung zur Nachbearbeitung von mit additiven Fertigungsverfahren hergestellten Bauteilen weist ein Gehäuse 10 auf, in dem sich eine Entpulverungskammer 12 zur Vorreinigung der Bauteile sowie eine Strahlkammer 14 zur Nachbehandlung der Bauteile befindet. Beide Kammern sind in dem Gehäuse 10 nebeneinander angeordnet und hermetisch so verschließbar, dass keine wesentlichen Mengen an Pulver aus der Entpulverungskammer 12 und an Strahlmittel aus der Strahlkammer 14 gelangen können. Zwischen den beiden Kammern ist eine Schottwand 16 vorgesehen, die eine Durchgangsöffnung 18 (Fig. 2) aufweist, welche von einer linear und vertikal verschiebbaren Klappe 20 verschließbar ist.

In der Entpulverungskammer 12 befindet sich eine Entpulverungseinheit 21, die entlang einer Horizontalführung 23 innerhalb der Kammer 12 hin und her bewegbar ist. Die Entpulverungseinheit 21 weist einen im Wesentlichen quaderförmigen Aufnahmebehälter 22 für Bauteile oder für einen gesamten Pulverkuchen auf, der an seiner Oberseite offen ist. An der Unterseite der Entpulverungseinheit 21 sind Schwingungserzeuger 24 angeordnet, um den Inhalt des Behälters zu entpulvern.

Der Behälter 22 ist durch einen Deckel 26 verschließbar, der automatisiert geöffnet und geschlossen werden kann, indem dieser durch eine nicht dargestellte Einrichtung auf den Behälter 22 abgesenkt (Fig. 1) und von diesem auch wieder abgehoben wird (Fig. 2).

Die in Richtung der Strahlkammer 14 weisende Seitenwand 28 (Fig. 2) des Behälters 22 ist über ein Scharnier nach außen abklappbar und weist zwei seitliche Führungen auf, so dass ein Transfer der innerhalb des Behälters befindlichen Bauteile 22 durch die Durchgangsöffnung 18 über die abgeklappte Seitenwand 28 möglich ist. Von dort können bei geöffneter Klappe 20 die Bauteile über eine Transferrutsche 30 in die Strahlkammer 14 gelangen, wobei erstere nach unten geneigt an der Oberseite der Klappe 20 befestigt ist. Die Transferrutsche 30 ist ebenfalls mit seitlichen Führungen versehen.

Innerhalb der Entpulverungskammer 12 ist weiterhin eine Beschickungseinheit 32 vorgesehen, die entlang einer Vertikalführung 34 innerhalb der Entpulverungskammer 12 auf und ab bewegbar ist, und die durch eine verschließbare Zugangsöffnung 36 (Fig. 2) horizontal aus der Entpulverungskammer 12 hinausbewegbar ist. Hierdurch lässt sich die Beschickungseinheit 32 außerhalb der Entpulverungskammer 12 mit Bauteilen beschicken. Anschließend kann die Beschickungseinheit 32 in die Entpulverungskammer 12 und dort vertikal nach oben bewegt werden, um die Bauteile möglichst beschädigungsfrei in den Behälter 22 der Entpulverungseinheit 21 abzugeben, nachdem diese unter die Beschickungseinheit 32 bewegt worden ist.

Wie die Fig. 1 bis 3 weiterhin verdeutlichen, ist in der Strahlkammer 14 ein Muldenband 40, beispielsweise aus einem Drahtgeflecht, Kunststoff oder auch Gummi, vorgesehen, das über nicht näher dargestellte Umlenkwalzen in zweierlei Richtung entlang der dargestellten Umlaufbahn, welche grundsätzlich die Form eines nach oben offenen U's aufweist, bewegt werden kann. Hierdurch werden innerhalb des Muldenbandes 40 befindliche Teile umgewälzt.

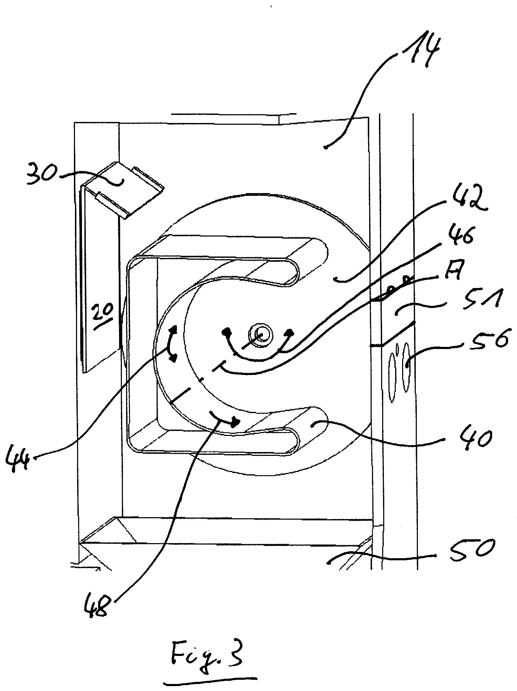

Das Muldenband 40 ist innerhalb der Strahlkammer 14 um eine horizontale Achse A (Fig. 2 und Fig. 3) verschwenkbar, indem das Muldenband bzw. dessen Umlenkwalzen zwischen zwei verschwenkbaren Scheiben 42 (in den Figuren ist nur eine Scheibe zu sehen) befestigt ist. Hierdurch kann das Muldenband 40 nicht nur entlang des Doppelpfeils 44 (Fig. 3) in zweierlei Richtung um seine Umlenkwalzen umlaufen, sondern das gesamte Muldenband lässt sich zusätzlich in zweierlei Richtung entlang des Doppelpfeils 46 (Fig. 3) um die horizontale Schwenkachse A hin und her verschwenken, was ein zusätzliches Umwälzen der in dem Muldenband befindlichen Bauteile fördert. Darüber hinaus kann hierdurch das Muldenband 40 sowohl in eine Aufnahmestellung (Fig. 2), wie auch in eine Abgabestellung (Fig. 3) verschwenkt werden. In der in Fig. 2 dargestellten Aufnahmestellung ist das Muldenband so weit entgegen dem Uhrzeigersinn verschwenkt, dass die entpulverten Bauteile über die abgeklappte Seitenwand 28 und die Transferrutsche 30 in das Innere des Muldenbandes gefördert werden können. In der in Fig. 3 dargestellten Abgabestellung ist das Muldenband so weit im Uhrzeigersinn verschwenkt, dass die im Inneren des Muldenbandes befindlichen Bauteile durch Drehen des Muldenbands in Richtung des Pfeils 48 aus dem Inneren des Muldenbands herausgefördert werden können. Zu diesem Zweck ist in einer Seitenwand des Gehäuses 10 eine in den Figuren nur schematisch dargestellte Austragsklappe 51 vorgesehen, die geöffnet werden kann, und durch die ein Austragen der Teile aus dem Gehäuse 10 möglich ist.

Fig. 1 verdeutlicht weiterhin, dass innerhalb der Strahlkammer 14 eine Strahleinrichtung 52 vorgesehen ist, die in das Innere des Muldenbandes 40 einführbar ist und mit deren Hilfe die in dem Muldenband befindlichen Bauteile gestrahlt werden können. Die Strahleinrichtung 52 ist in das Innere des Muldenbandes 40 abklappbar oder einfahrbar und an einem Dach 54 angeordnet (Fig. 1), das beim Strahlen ein Austreten von Strahlmittel aus dem Bereich des Muldenbandes verhindern soll. Zur verbesserten Darstellung sind die Strahleinrichtung 52 und das Dach 54 in den Fig. 2 und Fig. 3 nicht dargestellt.

Durch optionale Öffnungen 56 in der Seitenwand des Gehäuses 10, die ebenfalls verschließbar sind, können bei Wunsch die vorhandenen Strahleinrichtungen in im Inneren der Strahlkammer manuell gehandhabt werden, um je nach Anforderung (beispielsweise besonders empfindliche Bauteile) manuell zu strahlen.

Zum Auffangen, Rückführen und Trennen von Strahlmittel, das beispielsweise Artikel aus Glas, Keramik oder Kunststoff umfassen kann, sowie von Pulverresten ist unterhalb des Muldenbands ein Auffangtrichter 50 vorgesehen, der in einen Sichter 61 mündet. Hierdurch gelangen Strahlmittel, Strahlmittelbruchteile und noch verbliebene Pulverreste aus der Strahlkammer 14 durch den Trichter 50 in den Sichter 61 und werden dort mit Hilfe von Druckluft getrennt, so dass Pulverreste und Strahlmittelbruchstücke von noch wiederverwertbarem Strahlmittel getrennt werden.

In dem Gehäuse 10 im Bereich unterhalb der Entpulverungskammer 12 und der Strahlkammer 14 sind diverse Einrichtungen zum Reinigen, Trennen und Filtern der Verbrauchsmaterialien angeordnet. Das Bezugszeichen 60 bezeichnet einen Behälter für Restpulver und Strahlmittelbruch. Zur Reinigung des anfallenden Strahlmittels und zur Pulverrückgewinnung sind ein Ventilator 62 und ein Pulvervorabscheider 64 vorgesehen. Das Bezugszeichen 66 bezeichnet einen Filter. Sowohl für das von den Bauteilen entfernte Pulver wie auch für das abgestrahlte Strahlmittel sind nicht näher dargestellte Rückführungskreisläufe vorgesehen, um das Pulver und das Strahlmittel einer erneuten Verwendung zuzuführen. Außerdem kann in der Entpulverungskammer 12 und/oder in der Strahlkammer 14 eine Zuführeinrichtung für ionisierte Luft vorgesehen sein, um ein Anhaften von Pulver zu minimieren.

Nachfolgend wird die Betriebsweise der vorstehend beschriebenen Vorrichtung erläutert.

Bei einem Verfahren zur Nachbearbeitung von in additiven Fertigungsverfahren hergestellten Bauteilen mit einer Vorrichtung der vorstehend beschriebenen Art können die Bauteile zunächst in die Entpulverungskammer 12 eingebracht und dort bei geschlossener Klappe 20 entpulvert werden. Anschließend können die entpulverten Teile nach Öffnen der Durchgangsöffnung 18 in der Schottwand 16 und Überführen in die Strahlkammer 14 gestrahlt werden, nachdem die Schottwand 16 wieder verschlossen worden ist. Die derartig nachbearbeiteten Bauteile können anschließend gestrahlt und entpulvert durch die Austragsklappe 51 aus der Strahlkammer 14 ausgegeben werden.

Für ein Zuführen der nachzubearbeitenden Bauteile wird zunächst die Beschickungseinheit 32 horizontal aus dem Gehäuse 10 herausgefahren und mit den Bauteilen befüllt. Anschließend wird die Beschickungseinheit 32 in die in Fig. 1 dargestellte Position zurückgeführt und das Gehäuse 10 wird wieder verschlossen. Im Anschluss kann die Beschickungseinheit 32 vertikal in die in Fig. 2 dargestellte Position nach oben verfahren werden, woraufhin die Entpulverungseinheit 21 aus der in Fig. 2 dargestellten Position unter die Beschickungseinheit 32 horizontal nach links verfahren werden kann, so dass der Boden der Beschickungseinheit 32 geöffnet werden kann, um die Bauteile in den Behälter 22 der Entpulverungseinheit 21 abzugeben.

In einem weiteren Schritt wird die Entpulverungseinheit 22 in die in Fig. 2 dargestellte Position nach rechts verfahren, so dass der Deckel 26 auf den Behälter 22 aufgesetzt werden kann. Gleichzeitig kann die Beschickungseinheit 32 wieder in die in Fig. 1 dargestellte Position zurückgefahren werden. Zum Entpulvern der sich in dem Behälter 22 befindlichen Teile werden anschließend die Schwingungserzeuger 24 in Betrieb gesetzt und zusätzlich kann die Entpulverungseinheit 21 durch Umkehren der Bewegungsrichtung in Richtung des Doppelpfeils D horizontal hin und her bewegt werden, so dass ein Entpulvern der Bauteile zusätzlich begünstig ist.

Nach Beenden des Entpulverungsvorgangs wird die Entpulverungseinheit 21 in die in Fig. 2 dargestellte Position verfahren, der Deckel 26 wird abgehoben und die abklappbare Seitenwand 28 wird bei geöffneter Klappe 20 nach außen verschwenkt, so dass die Bauteile aus dem Behälter 22 ausgegeben werden können, beispielsweise indem der Boden des Behälters 22 angehoben wird oder indem eine Vibrationsvorrichtung in Betrieb genommen wird. Die Bauteile gleiten dann über die Seitenwand 28 und die Transferrutsche 30 in das Innere des Muldenbandes 40, welches in die in Fig. 2 dargestellte Position verschwenkt worden ist.

Nach Verschließen der Durchgangsöffnung 18 durch die Klappe 20 kann das Muldenband 40 entweder in die in Fig. 1 dargestellte Position verschwenkt werden und die Bauteile können mit Hilfe der Strahleinrichtung 52 gestrahlt werden. Zusätzlich ist es möglich, das Muldenband um die Schwenkachse A in Richtung des Doppelpfeils 46 (Fig. 3) zu verschwenken, um die Bauteile noch besser umzuwälzen. Gleichzeitig wird das Muldenband 40 auf seiner Umlaufbahn in eine und/oder in die andere Richtung bewegt.

Nach Herausfahren der Strahleinrichtung 52 aus dem Inneren des Muldenbandes 40 kann dieses in die in Fig. 3 dargestellte Abgabeposition verschwenkt werden, indem die Scheiben 42 um die Achse A im Uhrzeigersinn gedreht werden. Wenn anschließend das Muldenband in Richtung des Pfeils 48 (Fig. 3) entlang seiner Umlaufbahn bewegt wird, können die Bauteile aus dem Inneren des Muldenbandes durch die Austragsklappe 51 aus dem Gehäuse 10 gefördert werden.

Mit der vorstehend beschriebenen Vorrichtung bzw. dem vorstehend beschriebenen Verfahren können Bauteile gereinigt und nachbearbeitet werden. Hierbei können sowohl grob vorgereinigte Bauteile wie auch ein kompletter Bauraum einer additiven Fertigungsanlage bearbeitet werden. Das noch recycelfähige Pulver, das von den Bauteilen entfernt worden ist, wird einer Wiederverwendung zugeführt. Auch Bauteile aus anderen additiven Fertigungsverfahren können in der Vorrichtung bearbeitet werden. Für eine verbesserte Entpulverung bzw. Nachbearbeitung kann zusätzlich Druckluft auf die Bauteile aufgebracht werden.

## Patentansprüche

1. Vorrichtung zur Nachbearbeitung von mit additiven Fertigungsverfahren hergestellten Bauteilen, umfassend
eine Entpulverungskammer (12) zur Vorreinigung der Bauteile, in der eine Entpulverungseinheit (21) vorgesehen ist,
eine Kammer (14) zur Nachbehandlung der Bauteile, wobei beide Kammern (12, 14) hermetisch verschließbar sind,
**dadurch gekennzeichnet,**
**dass** die Kammer (14) zur Nachbehandlung der Bauteile eine Strahlkammer (14) mit einer Strahleinrichtung (52) für Strahlmittel aus Glas, Keramik oder Kunststoff ist,
**dass** die Entpulverungskammer (12) und die Strahlkammer (14) nebeneinander angeordnet sind,
**dass** zwischen beiden Kammern (12, 14) eine Schottwand (16) vorgesehen ist, die eine von einer Klappe (20) verschließbare Durchgangsöffnung (18) aufweist, und
**dass** die Entpulverungseinheit (21) in der Entpulverungskammer (12) durch einen sich automatisiert öffnenden Deckel (26) verschließbar ist.

2. Vorrichtung nach Anspruch 1,
wobei die Klappe (20) eine Transferrutsche (30) aufweist und insbesondere linear verschiebbar ist.

3. Vorrichtung nach Anspruch 1 oder 2,
wobei die Entpulverungseinheit (21) horizontal hin und her bewegbar ist.

4. Vorrichtung nach einem der vorstehenden Ansprüche,
wobei eine Beschickungseinheit (32) vorgesehen ist, mit der die Bauteile automatisiert in die Entpulverungskammer (12) eingebracht werden können.

5. Vorrichtung nach einem der vorstehenden Ansprüche,
wobei in der Strahlkammer (14) ein Muldenband (40) vorgesehen ist, das insbesondere schwenkbar gelagert ist.

6. Vorrichtung nach Anspruch 5,
wobei das Muldenband (40) in der Strahlkammer (14) um eine horizontale Achse (A) hin und her bewegbar ist.

7. Vorrichtung nach einem der vorstehenden Ansprüche 5 oder 6,
wobei im Bereich des Muldenbands (40) eine Strahleinrichtung (52) vorgesehen ist.

8. Vorrichtung nach einem der vorstehenden Ansprüche 5 - 7,
wobei das Muldenband (40) sowohl in eine Aufnahmestellung wie auch in eine Abgabestellung verschwenkbar ist.

9. Vorrichtung nach einem der vorstehenden Ansprüche,
wobei eine Abscheideeinrichtung (61, 64, 66) vorgesehen ist, in der Strahlmittelbruchstücke und nicht wiederverwertbare Pulverreste ausgesondert werden.

10. Vorrichtung nach einem der vorstehenden Ansprüche,
wobei in der Entpulverungskammer (12) und/oder in der Strahlkammer (14) eine Zuführeinrichtung für ionisierte Luft vorgesehen ist.

11. Vorrichtung nach einem der vorstehenden Ansprüche,
wobei neben oder unterhalb der Strahlkammer (14) ein Austragvorrichtung (51) für die nachbearbeiteten Bauteile vorgesehen ist.

12. Vorrichtung nach einem der vorstehenden Ansprüche,
wobei ein Rückführungskreislauf für Pulver und/oder ein Rückführungskreislauf für Strahlmittel vorgesehen sind.

13. Verfahren zur Nachbearbeitung von in additiven Fertigungsverfahren hergestellten Bauteilen in einer Vorrichtung nach zumindest einem der vorstehenden Ansprüche, umfassend die folgenden Schritte:
Einbringen der Bauteile in die Entpulverungskammer und Entpulvern derselben bei geschlossener Schottwand,
Öffnen der Schottwand und Überführen der entpulverten Bauteile durch die Durchgangsöffnung in die Strahlkammer,
Verschließen der Schottwand und Strahlen der Bauteile in der Strahlkammer; und
Ausgeben der gestrahlten und entpulverten Bauteile aus der Strahlkammer.

14. Verfahren nach Anspruch 13,
wobei das in der Entpulverungskammer anfallende Pulver und/oder das in der Strahlkammer anfallende Strahlmittel recycelt wird.

## Claims

1. An apparatus for the post-processing of components manufactured by additive manufacturing processes, said apparatus comprising
a depowdering chamber (12) for the pre-cleaning of the components, in which depowdering chamber (12) a depowdering unit (21) is provided, a chamber (14) for the post-treatment of the components, wherein
both chambers (12, 14) can be hermetically sealed,
**characterized in that**
the chamber (14) for the post-treatment of the components is a blasting chamber (14) comprising a blasting device (52) for blasting media composed of glass, ceramic material or plastic,
**in that** the depowdering chamber (12) and the blasting chamber (14) are arranged next to one another,
**in that** a partition wall (16) is provided between the two chambers (12, 14) and has a passage opening (18) which can be closed by a flap (20), and **in that** the depowdering unit (21) in the depowdering chamber (12) can be closed by a lid (26) which opens in an automated manner.

2. An apparatus in accordance with claim 1,
wherein the flap (20) has a transfer chute (30) and is in particular linearly displaceable.

3. An apparatus in accordance with claim 1 or claim 2,
wherein the depowdering unit (21) is horizontally movable to and fro.

4. An apparatus in accordance with any one of the preceding claims,
wherein a loading unit (32) is provided with which the components can be inserted in an automated manner into the depowdering chamber (12).

5. An apparatus in accordance with any one of the preceding claims,
wherein a trough belt (40), which is in particular pivotably supported, is provided in the blasting chamber (14).

6. An apparatus in accordance with claim 5,
wherein the trough belt (40) is movable to and fro about a horizontal axis (A) in the blasting chamber (14).

7. A apparatus in accordance with one of the preceding claims 5 or 6,
wherein a blasting device (52) is provided in the region of the trough belt (40).

8. An apparatus in accordance with any one of the preceding claims 5 to 7, wherein the trough belt (40) can be pivoted both into a pick-up position and into a placement position.

9. An apparatus in accordance with any one of the preceding claims,
wherein a separating device (61, 64, 66) is provided in which blasting media fragments and non-recyclable powder residues are separated out.

10. An apparatus in accordance with any one of the preceding claims,
wherein a supply device for ionized air is provided in the depowdering chamber (12) and/or in the blasting chamber (14).

11. An apparatus in accordance with any one of the preceding claims,
wherein a discharge apparatus (51) for the post-processed components is provided next to or beneath the blasting chamber (14).

12. An apparatus in accordance with any one of the preceding claims,
wherein a return circuit for powder and/or a return circuit for blasting media is/are provided.

13. A method of post-processing components manufactured in additive manufacturing processes in an apparatus in accordance with at least one of the preceding claims, comprising the following steps:
inserting the components into the depowdering chamber and depowdering said components when the partition wall is closed,
opening the partition wall and transferring the depowdered components through the passage opening into the blasting chamber,
closing the partition wall and blasting the components in the blast chamber, and
outputting the blasted and depowdered components from the blasting chamber.

14. A method in accordance with claim 13,
wherein the powder accumulating in the depowdering chamber and/or the blasting media accumulating in the blasting chamber is/are recycled.

## Revendications

1. Dispositif de post-traitement de pièces fabriquées par des procédés de fabrication additive, comprenant
une chambre de dépoudrage (12) pour le nettoyage préalable des pièces, dans laquelle est prévue une unité de dépoudrage (21),
une chambre (14) de post-traitement des pièces, les deux chambres (12, 14) pouvant être fermées hermétiquement,
**caractérisé en ce que**
la chambre (14) de post-traitement des pièces comprend une chambre de grenaillage (14) ayant un organe de grenaillage (52) pour produits abrasifs en verre, céramique ou matière plastique,
**en ce que** la chambre de dépoudrage (12) et la chambre de grenaillage (14) sont disposées l'une à côté de l'autre,
**en ce qu'**une cloison (16) est prévue entre les deux chambres (12, 14), laquelle présente un orifice de passage (18) obturable par un volet (20), et **en ce que** l'unité de dépoudrage (21) dans la chambre de dépoudrage (12) est obturable par un couvercle (26) à ouverture automatisée.

2. Dispositif selon la revendication 1,
dans lequel le volet (20) comporte un glissoir de transfert (30) et peut en particulier être déplacé linéairement.

3. Dispositif selon la revendication 1 ou 2,
dans lequel l'unité de dépoudrage (21) est mobile horizontalement en va-et-vient.

4. Dispositif selon l'une des revendications précédentes,
dans lequel est prévue une unité de chargement (32) qui permet d'introduire de manière automatisée les pièces dans la chambre de dépoudrage (12).

5. Dispositif selon l'une des revendications précédentes,
dans lequel une bande en auge (40) est prévue dans la chambre de grenaillage (14), qui est en particulier montée de façon mobile en pivotement.

6. Dispositif selon la revendication 5,
dans lequel la bande en auge (40) dans la chambre de grenaillage (14) est mobile en va-et-vient autour d'un axe horizontal (A).

7. Dispositif selon l'une des revendications précédentes 5 ou 6,
dans lequel un organe de grenaillage (52) est prévu dans la zone de la bande en auge (40).

8. Dispositif selon l'une des revendications précédentes 5 à 7,
dans lequel la bande en auge (40) peut être pivotée aussi bien dans une position de réception que dans une position de distribution.

9. Dispositif selon l'une des revendications précédentes,
dans lequel est prévu un organe de séparation (61, 64, 66) dans lequel les fragments de produit abrasif et les résidus de poudre non recyclables sont éliminés.

10. Dispositif selon l'une des revendications précédentes,
dans lequel un organe d'alimentation en air ionisé est prévu dans la chambre de dépoudrage (12) et/ou dans la chambre de grenaillage (14).

11. Dispositif selon l'une des revendications précédentes,
dans lequel un dispositif d'évacuation (51) pour les pièces post-traitées est prévu à côté ou en dessous de la chambre de grenaillage (14).

12. Dispositif selon l'une des revendications précédentes,
dans lequel est prévu un circuit de retour de poudres et/ou un circuit de retour de produits abrasifs.

13. Procédé de post-traitement de pièces fabriquées par des procédés de fabrication additive dans un dispositif selon l'une au moins des revendications précédentes, comprenant les étapes suivantes consistant à :
introduire les pièces dans la chambre de dépoudrage et les dépoudrer, la cloison étant fermée,
ouvrir la cloison et transférer les pièces dépoudrées à travers l'ouverture de passage jusque dans la chambre de grenaillage,
fermer la cloison de protection et grenailler les pièces dans la chambre de grenaillage ; et
sortir les pièces grenaillées et dépoudrées de la chambre de grenaillage.

14. Procédé selon la revendication 13,
dans lequel la poudre issue de la chambre de dépoudrage et/ou le produit abrasif issu de la chambre de grenaillage est recyclé(e).
